Europäisches Patentamt

European Patent Office

Office européen des brevets

(19)

(11) Publication number: **0 054 532**
**B1**

# EUROPEAN PATENT SPECIFICATION

(12)

(45) Date of publication of patent specification: **18.03.87**

(51) Int. Cl.⁴: **G 01 P 5/18**, G 01 P 3/68

(21) Application number: **81850243.7**

(22) Date of filing: **14.12.81**

(54) Apparatus for measuring the flow rate of molten material.

(30) Priority: **16.12.80 SE 8008840**

(43) Date of publication of application:
**23.06.82 Bulletin 82/25**

(45) Publication of the grant of the patent:
**18.03.87 Bulletin 87/12**

(84) Designated Contracting States:
**AT BE CH DE FR GB IT LI LU NL**

(56) References cited:
**DE-A-2 014 726**
**DE-A-2 616 443**
**DE-A-2 639 729**
**DE-A-2 910 018**
**US-A-3 388 328**
**US-A-3 739 636**

(73) Proprietor: **Gedevelop Aktiebolag**
**Fack 530**
**S-260 50 Billesholm (SE)**

(72) Inventor: **Ransheim, Anders P.**
**Uppsalagatan 7**
**S-252 50 Helsingborg (SE)**
Inventor: **Thomsen, Arne**
**Villagatan 1**
**S-265 00 Astorp (SE)**
Inventor: **Holmgren, Per**
**Källvägen 17 A**
**S-262 00 Ängelholm (SE)**

(74) Representative: **Carminger, Lars**
**Carminger, Uusitalo & Nyberg Patentbyra AB**
**Box 19055**
**S-104 32 Stockholm (SE)**

EP 0 054 532 B1

Courier Press, Leamington Spa, England.

## Description

The present invention relates to apparatus for determining the flow rate of a flow, stream or jet of a molten radiation-emitting material, in particular molten glass or ceramic or mineral materials.

When measuring the flow rate of such a flow, stream or jet of molten material having a very high temperature, it is obvious that no mechanical contact between the material and the measuring apparatus is possible. For the purpose of measuring the velocity of a solid elongate object, e.g. a paper web, which moves in the direction of its longitudinal axis, without mechanical contact between the measuring apparatus and the object, it has previously been proposed that at each of two mutually spaced locations along the movement path of the object there is sensed a signal which originates from or is influenced by that part of the moving object located at that moment at the sensing location, said signal having, for example, the form of light reflected from the object. The signals obtained in this way from the two sensing locations are of a noise character and are compared with each other in a manner to enable the magnitude of their mutual displacement in time to be established, whereat, when the distance between the two sensing locations is known, said time displacement can be used to determine the velocity of the object. Velocity measuring apparatus of this kind are described, for example, in the Swedish Patent Specifications Nos. 329 735, 334 254, 348 055 and 371 015. As will be seen from these patent specifications, velocity measuring apparatus of this, previously known kind are encumbered with serious problems and are relatively complicated, primarily because of the necessity of comparing and determining the relative time displacement between two signals of noise character with an accuracy and reliability satisfactory to the measuring result.

It has also been proposed, for example in the German patent specification 2 616 443, the U.S. patent specification 3 388 328 and the British patent specification 1 132 364, similar apparatus for measuring the velocity of an elongate solid object moving in its axial direction, in which the heat radiation of the object is sensed at two spaced locations along the moving object and the object is locally heated at regular intervals along its length by the application of heat radiation pulses to the object at a location upstream of the sensing locations. However, it is obvious that such an apparatus cannot be used for measuring the flow rate of a flow, stream or jet of a molten material which is already heated to a very high temperature.

Consequently, the object of the present invention is to provide an improved, simple and reliable apparatus, which can be used for measuring the flow rate of a flow, stream or jet of molten, radiation-emitting material, in particular molten glass or ceramic or mineral materials.

The method and apparatus according to the invention are as set out in claims 1 and 3, respectively.

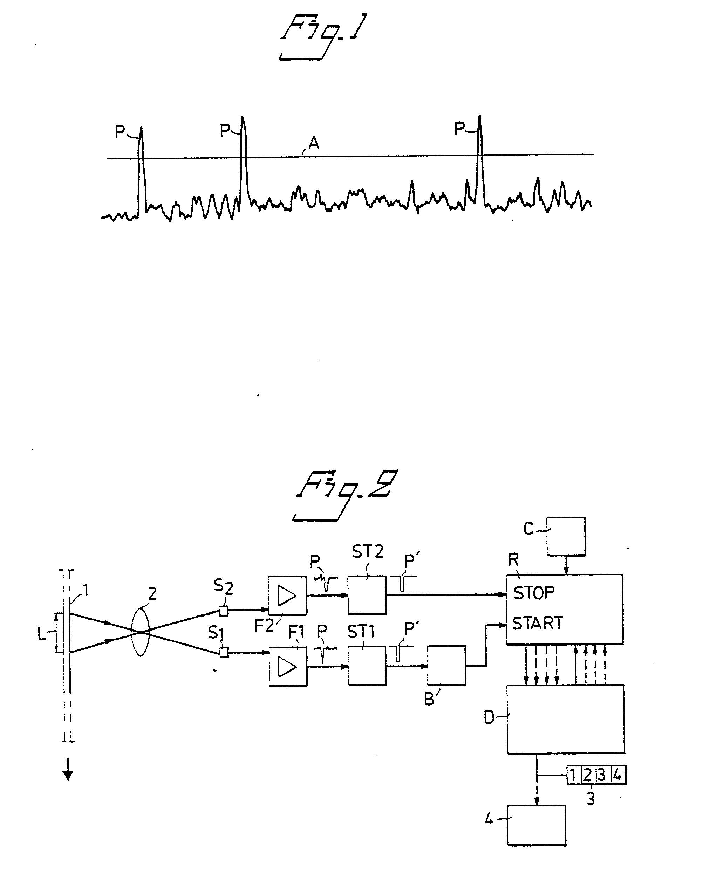

As mentioned in the aforegoing, the invention has been developed for determining the flow rate of a flow, stream or jet of molten radiation emitting material, primarily molten glass or ceramic or mineral materials, for example from the smelter in a machine for manufacturing fibres or filaments of glass or ceramic or mineral materials. The invention is based on the discovery that although, when the radiation emitted by a limited section of a flow, stream or jet of a molten material of this kind, as for instance a glass jet, is detected by means of a radiation detector, a substantial part of the output signal of the radiation detector is of a noise character it also contains pulse-like amplitude excursions, which are of short duration but large magnitude and which occur randomly in time. Figure 1 of the accompanying drawings illustrates by way of example the output signal from a radiation detector arranged to receive radiation emitted from a limited section of a molten glass jet. As illustrated by the figure, the major part of this signal has a noise character, but the signal also contains a plurality of pulse-like and very large intensity variations or amplitude excursions. These pulse-like variations in amplitude originate from local, discrete intensity variations in the radiation emitted from the glass jet, these variations most probably being caused by the presence of gas or air bubbles in the glass jet, particularly close to the external surface of the jet. In accordance with the invention, these pulse-like variations in amplitude in the output signals of the two radiation detectors are utilized to measure the flow rate of the glass jet, by applying the output signals of the two detectors to signal-processing circuits which discriminate the large amplitude pulses P in the detector output signals, so that said pulses only occur on the outputs of the signal-processing circuits, and by measuring the time interval between one such pulse P from the upstream radiation detector and the nearest following pulse P in time in the signal from the downstream located detector, which pulse must originate from the same local, discrete deviation in the radiation emitted by the glass jet, and utilizing said time-interval for calculating the flow rate of the glass jet.

Although, as before mentioned, the invention has primarily been developed for determining the flow rate of a flow, stream or jet of molten glass or ceramic or mineral material, the invention can also be applied in other instances for determining the flow rate of a molten, radiation emitting material, as for instance molten metal, provided that the radiation intensity of the material flow exhibits local, discrete deviations of substantial amplitude at differing locations along the material flow. If such local, discrete intensity deviations of considerable amplitude do not occur naturally in the material flow, they can be created particularly for measuring the flow rate. This can be achieved, for example, by introducing small gas bubbles into the flow, stream or jet of molten material upstream of the measuring device, said bubbles giving rise to the desired local, discrete intensity deviations in radiation.

The invention will now be described in more detail with reference to the accompanying drawing, in which

Figure 1 illustrates the previously discussed output signal from a radiation detector which receives radiation from a limited section of a molten glass jet; and

Figure 2 is an exemplary embodiment of a simplified circuit diagram for a measuring apparatus according to the invention.

Figure 2 illustrates schematically a flow, stream or jet 1 of molten, radiation-emitting material 1, for example a molten glass jet, the flow rate $V$ of which in the direction marked by the arrow in the figure is to be determined. An apparatus according to the invention for determining said flow rate $V$ comprises two radiation detectors S1 and S2, which are arranged to receive radiation from two limited sections of the jet 1 located at a suitable distance L from each other along the flow path of the jet 1, via a suitable lens system 2 not shown in detail in the figure. The output signals of the radiation detectors S1 and S2 are each applied to a respective amplifier F1 and F2, from which there are thus obtained signals of the appearance illustrated by way of example in Figure 1 and discussed in the aforegoing. Thus the major part of these signals have a noise character, but also contain large pulse-like amplitude variations P originating from local, discrete deviations in the intensity of the radiation emitted from the glass jet 1. It will be understood that the interval in time T between two pulses P following each other in time in the output signals from the radiation detectors S1 and S2, respectively, will constitute a measurement of the flow rate $V$ of the glass jet 1 in accordance with the expression

$$V = \frac{L}{T}$$

In accordance with the invention, the output signals from the amplifiers F1 and F2 are each applied to a respective signal-processing circuit, which in the illustrated embodiment comprises a Schmitt trigger ST1 and ST2, each of which is arranged to deliver on its output solely signal pulses P' corresponding to the pulses P in the input signal which exceed a predetermined amplitude level, for example the amplitude A indicated in Figure 1.

For determining the time interval between two signal pulses P' following each other in time from the Schmitt-trigger circuits ST1 and ST2, respectively, there is provided a digital counter R, which can be driven from a clock pulse generator C and which has a start input, to which there are applied the signal pulses P' from ST1, while the signal pulses P' from ST2 are applied to the stop input of the counter. Thus, the counter R is started when a signal pulse P' occurs on the output of ST1, i.e. from the radiation detector S1, and is stopped when the signal pulse P' originating from the same local, discrete intensity deviation in the radiation from the glass jet 1 occurs on the output of ST2, i.e. from the radiation detector S2. As will be understood, the count in the counter R will then constitute a measurement of the time interval between the signal pulses P' from the radiation detectors S1 and S2. The count in the counter R is transferred to a digital calculating and control unit D, which then resets the counter R to zero, so that it can be started by the next signal pulse P' arriving from ST1. The calculating and control unit D uses the aforesaid count in the counter R to calculate the flow rate $V$ of the glass jet 1 in accordance with the aforementioned expression, and transfers the result of the calculation in signal form to a display unit 3 and/or to a controlling data processor or control apparatus 4, for example for controlling or regulating the flow rate of the glass jet 1.

When calculating the flow rate V, the calculating unit D may, to advantage, be designed to utilize the mean value of a plurality of counts transferred from the counter R and each representing the interval in time between two, timewise sequential pulses P in the signals from the radiation detectors S1 and S2, respectively. In this way, the determination of flow rate will be less sensitive to variations in the rise time of the pulses P in the output signals of the radiation detectors S1 and S2.

In order to ensure that the start pulse and stop pulse for the counter R actually originate from the same local, discrete intensity deviation in the radiation emitted by the glass jet 1, the start pulses from ST1, i.e. from the radiation detector S1, are applied to the start input of the counter R via a gating circuit B, which is opened or enabled to allow through a new pulse P' from ST1 only after a predetermined time interval after the appearance of a preceding start pulse P' from ST1. This time interval is so selected that it corresponds at least to the maximum expected time for movement of the glass jet 1 over the distance L between the measuring locations of the two radiation detectors S1 and S2.

**Claims**

1. A method for measuring the flow velocity of a flow, stream or jet of a molten radiation-emitting material, comprising the steps of

a) detecting the intensity of the radiation emitted from a limited section of the material flow at two separate locations, which are spaced apart by a predetermined distance along the path of the flow, and generating electric signals corresponding to the detected radiation intensities,

b) using said signals from said two detecting locations for determining the time of travel of the material flow over said predetermined distance, and

c) using said time of travel and said predetermined distance for calculating the flow velocity of the material flow, and characterized in that the time of travel of the material flow over said predetermined distance is determined by

d) discriminating from said signals from said two detecting locations all pulse-like amplitude variations exceeding a predetermined amplitude, said amplitude variations originating from randomly occurring, local, discrete deviation in the intensity of the radiation of the material flow caused by the presence of local inhomogeneities in the material,

e) measuring the time interval between the occurrence of such an amplitude variation in the signal from the upstream detecting location and the first subsequent amplitude variation occurring in the signal from the downstream detecting location, but only when said amplitude variation in said signal from the upstream detecting location is preceded by a predetermined period of time without any amplitude variations having occurred in said signal from the upstream detecting location, said predetermined period of time being selected to exceed the maximum expected travel time for the material flow over said distance between said two detecting locations, and

f) using said time interval as a measure of the time of travel of the material flow over said predetermined distance between said two detecting locations for calculating the flow velocity of the material flow.

2. A method as claimed in claim 1, wherein the mean value of a plurality of said measured time intervals is used as a measure of the travel time of said material flow over said predetermined distance.

3. An apparatus for measuring the flow velocity of a flow, stream or jet of a molten radiation emitting material comprising

a) two radiation detectors (S1, S2) arranged to receive radiation emitted from a limited section of the material flow (1) at two different locations spaced apart by a predetermined distance along the flow path of the material flow and to produce an electric output signal each corresponding to the intensity of said received radiation,

b) signal-processing circuits responsive to the electric output signals of said two radiation detectors (S1, S2) for determining the time of travel of the material flow over said predetermined distance, and

c) a calculating unit for receiving from said signal-processing circuits said determined value of the time of travel of the material flow over said predetermined distance and for calculating the flow velocity of the material flow on the basis of said determined value and said distance, characterized in that said signal-processing circuits comprise

d) for each radiation detector (S1, S2) a pulse-discriminating circuit (ST1, ST2) for discriminating from the output signal of said radiation detector all pulse-like amplitude variations (P) which exceed a predetermined magnitude (A) and to produce corresponding signal pulses (P') on its output,

e) a time measuring circuit (R, C) having a start input and a stop input for measuring the time interval between a signal pulse received on said start input and a subsequent signal pulse received on said stop input and for providing the value of said measured time interval on an output, said start input being connected to the output of the pulse-discriminating circuit (ST1) associated with the upstream detector (S1) and said stop input being connected to the output of the pulse-discriminating circuit (ST2) associated with the down-stream detector (S2), and

f) a gating circuit (B) inserted between the start input of said time-measuring circuit (R, C) and the output of the pulse-discriminating circuit (ST1) associated with the upstream detector (S1) for allowing through only such signal pulses on the output of said pulse-discriminating circuit (ST1) which are preceded by a predetermined period of time during which no such signal pulses have appeared on said output, said predetermined period of time being selected to exceed the maximum expected time of travel of said material flow over said predetermined distance, and in that the calculating unit (D) uses the value of said measured time interval on the output of said time-measuring circuit (R, C) as the measure of the travel time of the material flow over said predetermined distance.

4. An apparatus as claimed in claim 3, wherein said time-measuring circuit comprises a digital counter driven with a constant frequency, said counter being started by signal pulses received on said start input and stopped by signal pulses received on said stop input and reset before each renewed start.

5. An apparatus as claimed in claim 3, wherein said calculating unit uses the mean value of a plurality of measured time intervals received from the output of the time-measuring circuit as a measure of the travel time of the material flow over said predetermined distance.

**Patentansprüche**

1. Verfahren zum Messen der Strömungsgeschwindigkeit eines Stromes oder Strahles eines geschmolzenen strahlungsemittierenden Materiales mit den folgenden Schritten:

a) Erfassen der Intensität der von einem begrenzten Abschnitt des Materialstromes an zwei separaten Stellen, die eine vorgegebene Strecke entlang der Strömungsbahn voneinander beabstandet sind, emittierten Strahlung und Erzeugen von elektrischen Signalen, die den erfaßten Strahlungsintensitäten entsprechen,

b) Verwenden dieser Signale von den beiden Erfassungsstellen zum Messen der Zeit, in der sich der Materialstrom über die vorgegebene Strecke bewegt, und

c) Verwenden dieser Bewegungszeit und der vorgegebenen Strecke zum Berechnen der Strömungsgeschwindigkeit des Materialstromes, dadurch gekennzeichnet, daß die Bewegungszeit des Materialstromes über die vorgegebenen Strecke durch die folgenden Schritte bestimmt wird:

d) Selektieren aus den Signalen von den beiden Erfassungsstellen sämtlicher impulsähnlichen Amplitudenänderungen, die eine vorgegebene Amplitude übersteigen und die von wahllos auftretenden, örtlichen und sprunghaften Intensitätsabweichungen der Strahlung des Materialstromes ausgehen, welche durch das Vorhandensein von örtlichen Inhomogenitäten im Material verursacht werden,

e) Messen des Zeitintervalles zwischen dem Auftreten einer derartigen Amplitudenänderung im Signal von der aufstromseitigen Erfassungsstelle und der ersten folgenden Amplitudenänderung im Signal der abstromseitigen Erfassungsstelle, jedoch nur dann, wenn der Amplitudenänderung im Signal von der aufstromseitigen Erfassungsstelle eine vorgegebenen Zeitdauer ohne Auftritt irgendeiner Amplitudenänderung im Signal von der aufstromseitigen Erfassungsstelle vorhergeht, wobei diese vorgegebene Zeitdauer so ausgewählt ist, daß sie die maximal erwartete Bewegungszeit für den Materialstrom über die Strecke zwischen den beiden Erfassungsstellen überschreitet, und

f) Verwenden dieses Zeitintervalles als Messung der Bewegungszeit des Materialstromes über die vorgegebene Strecke zwischen den beiden Erfassungsstellen zum Berechnen der Strömungsgeschwindigkeit des Materialstromes.

2. Verfahren nach Anspruch 1, dadurch gekennzeichnet, daß der Mittelwert einer Vielzahl von gemessenen Zeitintervallen als Messung der Bewegungszeit des Materialstromes über die vorgegebene Strecke verwendet wird.

3. Vorrichtung zum Messen der Strömungsgeschwindigkeit eines Stromes oder Strahles geschmolzenen strahlungsemittierenden Materiales mit

a) zwei Strahlungsdetektoren (S1, S2), die so angeordnet sind, daß sie die von einem begrenzten Abschnitt des Materialstromes (1) an zwei unterschiedlichen Stellen, die eine vorgegebene Strecke entlang der Strömungsbahn des Materiales voneinander beabstandet sind, emittierte Strahlung empfangen und ein elektrisches Ausgangssignal erzeugen, das jeweils der Intensität der empfangenen Strahlung entspricht,

b) Signalverarbeitungsschaltungen, die auf die elektrischen Ausgangssignale der beiden Strahlungsdetektoren (S1, S2) ansprechen und die Bewegungszeit des Materialstromes über die vorgegebene Strecke ermitteln, und

c) eine Recheneinheit zum Empfangen des ermittelten Bewegungszeitwertes des Materialstromes über die vorgegebene Strecke von den Signalverarbeitungsschaltungen und zum Berechnen der Strömungsgeschwindigkeit des Materialstromes auf der Basis des ermittelten Wertes und der Strecke, dadurch gekennzeichnet, daß die Signalverarbeitungsschaltungen die folgenden Bestandteile umfassen:

d) für jeden Strahlungsdetektor (S1, S2) eine Impulsselektionsschaltung (ST1, ST2) zum Selektieren sämtlicher impulsähnlicher Amplitudenänderungen (P), die eine vorgegebenen Größe (A) übersteigen, aus dem Ausgangssignal des Strahlungsdetektors und zum Erzeugen von entsprechenden Signalimpulsen (P') an ihrem Ausgang,

e) eine Zeitmeßschaltung (R, C), die einen Starteingang und einen Stopeingang zum Messen des Zeitintervalles zwischen einem am Starteingang empfangenen Signalimpuls und einem am Stopeingang empfangenen nachfolgenden Signalimpuls und zum Anlegen des Wertes des gemessenen Zeitintervalls an einen Ausgang aufweist, wobei der Starteingang an den Ausgang der Impulsselektierschaltung (ST1), die dem aufstromseitigen Detektor (S1) zugeordnet ist, angeschlossen ist und der Stopeingang an den Ausgang der Impulsselektierschaltung (ST2), die dem abstromseitigen Detektor (S2) zugeordnet ist, angeschlossen ist, und

f) eine Torschaltung (B), die zwischen den Starteingang der Zeitmeßschaltung (R, C) und den Ausgang der Impulsselektierschaltung (ST1), die dem aufstromseitigen Detektor (S1) zugeordnet ist, eingesetzt ist und nur solche Signalimpulse am Ausgang der Impulsselektierschaltung (ST1) durchläßt, denen eine vorgegebene Zeitdauer vorausgeht, während der keine solchen Signalimpulse am Ausgang aufgetreten sind, wobei diese vorgegebene Zeitdauer so ausgewählt ist, daß sie die maximal erwartete Bewegungszeit des Materialstromes über die vorgegebene Strecke übersteigt, wobei die Recheneinheit (D) den Wert des gemessenen Zeitintervalles am Ausgang der Zeitmeßschaltung (R, C) als Maß für die Bewegungszeit des Materialstromes über die vorgegebene Strecke benutzt.

4. Vorrichtung nach Anspruch 3, dadurch gekennzeichnet, daß die Zeitmeßschaltung einen Digitalzähler umfaßt, der mit einer konstanten Frequenz betrieben wird und durch am Starteingang empfangene Signalimpulse gestartet und durch am Stopeingang empfangene Signalimpulse gestoppt sowie vor einem erneuten Start rückgestellt wird.

5. Vorrichtung nach Anspruch 3, dadurch gekennzeichnet, daß die Recheneinheit den Mittelwert einer Vielzahl von gemessenen Zeitintervallen, die vom Ausgang der Zeitmeßschaltung empfangen wurden, als Maß für die Bewegungszeit des Materialstromes über die vorgegebene Strecke benutzt.

**Revendications**

1. Procédé de mesure de la vitesse de courant d'un courant, flot ou jet d'une matière radio-émettrice en fusion comprenant les étapes de:

a) détecter l'intensité de la radiation émise par une partie limitée du flux de matière à deux endroits séparés, espacés par une distance prédéterminée le long de la trajectoire du flux, et créer des signaux électriques correspondant aux intensités des radiations détectées,

b) utiliser lesdits signaux desdits deux endroits de détection pour déterminer le temps de passage du flux de matière sur la distance prédéterminée, et

c) utiliser ledit temps de passage et ladite distance prédéterminée pour calculer la vitesse de courant du flux de matière, et caractérisé en ce que le temps de passage du flux de matière sur ladite distance prédéterminée est déterminé par:

d) discriminer lesdits signaux desdits deux endroits de détection de toutes les variations d'amplitude sous forme d'impulsions excédant une amplitude pré-déterminée, lesdites variations d'amplitudes ayant leur origine dans une déviation aléatoire, locale et discrète dans l'intensité de radiation du flux de matière causée par la présence d'inhomogénéités locales dans la matière,

e) mesurer l'intervalle de temps entre l'arrivée d'une telle variation d'amplitude dans le signal à l'endroit de détection amont et la première variation d'amplitude suivante servant dans le signal à l'endroit de détection aval, mais seulement si ladite variation d'amplitude dans ledit signal à l'endroit de détection amont est précédée par un laps de temps prédéterminé sans aucune variation d'amplitude dans ledit signal à l'endroit de détection amont, ledit laps de temps prédéterminé étant choisi pour être supérieur au temps de passage maximum prévu du flux de matière sur ladite distance entre lesdits deux endroits de détection, et

f) utiliser ledit intervalle de temps comme une mesure du temps de passage du flux de matière sur ladite distance prédéterminée entre lesdits deux endroits de détection pour calculer la vitesse de courant du flux de matière.

2. Procédé selon la revendication 1, dans lequel la valeur moyenne de plusieurs desdits intervalles de temps mesurés est utilisée comme une mesure de temps de passage dudit flux de matière sur ladite distance prédéterminée.

3. Dispositif de mesure de la vitesse de courant d'un courant, flot ou jet d'une matière radioémettrice en fusion, comprenant:

a) deux détecteurs de radiation (S1, S2) disposés pour recevoir une radiation émise par une partie limitée du flux de matière (1) à deux endroits différents séparés par une distance prédéterminée le long de la trajectoire du flux de matière et pour produire un signal de sortie électrique dont chacun correspond à l'intensité de ladite radiation reçue,

b) des circuits de traitement du signal dépendants des signaux de sortie électriques desdits deux détecteurs de radiation (S1, S2) pour déterminer le temps de passage du flux de matière sur ladite distance prédéterminée, et

c) une unité de calculation pour recevoir desdits circuits de traitement du signal ladite valeur déterminée de temps de passage du flux de matière sur ladite distance pré-déterminée et pour calculer la vitesse de courant du flux de matière sur la base de ladite valeur déterminée et de ladite distance, caractérisé en ce que lesdits circuits de traitement du signal comprennent:

d) pour chaque détecteur de radiation (S1, S2), un discriminateur (ST1, ST2) pour discriminer du signal de sortie dudit détecteur de radiation toutes les variations d'amplitude (P) sous forme d'impulsions qui dépassent une valeur (A) prédéterminée et pour produire des impulsions correspondantes au signal (P') à sa sortie,

e) un circuit de mesure du temps (R, C) ayant une entrée de départ et une entrée d'arrêt pour mesurer l'intervalle de temps entre une impulsion reçue à ladite entrée de départ et une impulsion subséquente reçue à ladite entrée d'arrêt et pour fournir la valeur dudit intervalle de temps mesuré à une sortie, ladite entrée de départ étant reliée à la sortie du discriminateur (ST1) associé au détecteur amont (S1) et ladite entrée d'arrêt étant reliée à la sortie du discriminateur (ST2) associé au détecteur aval (S2), et

f) une porte (B) insérée entre l'entrée de départ dudit circuit de mesure du temps (R, C) et la sortie du discriminateur (ST1) associé au détecteur amont (S1) pour autoriser le passage des seules impulsions à la sortie dudit discriminateur (ST1) qui sont précédées d'un laps de temps prédéterminé pendant lequel aucune telle impulsion n'est survenue sur ladite sortie, ledit laps de temps prédéterminé étant choisi pour dépasser le temps de passage maximum prévu dudit flux de matière sur ladite distance prédéterminée, et en ce que l'unité de calculation (D) utilise la valeur dudit intervalle de temps mesuré à la sortie dudit circuit de mesure du temps (R, C) comme la mesure du temps de passage du flux de matière sur ladite distance prédéterminée.

4. Dispositif selon la revendication 3, dans lequel ledit circuit de mesure du temps comprend un compteur digital mené à fréquence constante, ledit compteur étant démarré par les impulsions reçues à ladite entrée de départ et stoppé par les impulsions reçues à ladite entrée d'arrêt, et rétabli avant chaque nouveau départ.

5. Dispositif selon la revendication 3, dans lequel ladite unité de calculation utilise la valeur moyenne de plusieurs intervalles de temps mesurés reçus de la sortie du circuit de mesure du temps comme une mesure du temps de passage du flux de matière sur ladite distance prédéterminée.

# *Fig.1*

# *Fig.2*